# NOUVEAU FASCICULE DE BREVET EUROPEEN

(11) **EP 0 936 716 B2**
(45) Date de publication et mention de la décision concernant l'opposition: **30.12.2015**
(45) Mention de la délivrance du brevet: 29.04.2009
(21) Numéro de dépôt: 99410002.2
(22) Date de dépôt: 18.01.1999
(51) Int. Cl.: H02H 3/00, H02H 3/04, H02H 3/05, H02H 3/33

(54) **Dispositif de protection différentielle**
Differentialschutz
Differential protection device

(30) Priorité: 11.02.1998 FR 9801858
(43) Date de publication de la demande: 18.08.1999
(73) Titulaire: Schneider Electric Industries SAS, 92500 Rueil-Malmaison (FR)
(72) Inventeur: Paupert, Marc, 38050 Grenoble cedex 09 (FR); Jacquot, Michel, 38050 Grenoble cedex 09 (FR)
(74) Mandataire: Picard, Laurent

(56) Documents cités:
- EP-A2- 0 506 602
- DE-A1- 3 114 213
- DE-A1- 4 317 270
- DE-C2- 3 153 749
- DE-T2- 3 783 704
- GB-A- 2 072 441
- GB-A- 2 162 002
- GB-A- 2 269 064
- US-A- 4 209 818
- US-A- 4 335 413
- US-A- 4 833 564
- US-A- 4 837 519
- US-A- 5 172 293
- US-A- 5 283 553
- US-A- 5 373 411

## Description

L'invention concerne un dispositif de protection différentielle comportant :
- des moyens de mesure de courant différentiel,
- des moyens de traitement connectés aux moyens de mesure pour recevoir un premier signal représentatif d'un courant différentiel,
- des moyens actionneurs.

Les dispositifs de protection différentielle connus comportent généralement un tore de mesure ayant un circuit magnétique qui entoure des conducteurs de ligne pour mesurer un courant différentiel. Le tore comporte un enroulement secondaire connecté à un circuit électronique de déclenchement qui commande un relais et éventuellement un mécanisme d'ouverture de contacts.

De manière connue, les dispositifs de protection intègrent des fonctions de test qui permettent de tester le fonctionnement de la protection différentielle.Le test génère dans le tore un courant de test ayant les mêmes effets qu'un courant de défaut différentiel. Généralement, le courant de test est injecté dans un enroulement supplémentaire du tore de mesure.

Lorsque le dispositif de protection doit comporter une sélection de calibre de fonctionnement ou une sélection de seuil de courant de déclenchement, le dispositif de test doit pouvoir injecter un courant suffisamment élevé pour être détecté quelle que soit la sélection. Le calibre sélectionné peut être réglé à la valeur maximale.

Les dispositifs de protection connus ne permettent pas de réaliser efficacement les fonctions de test. En effet, le courant de test doit avoir les mêmes effets qu'un courant de défaut supérieur à un seuil maximal de réglage ou de sélection. Pour avoir cet effet, le courant de test doit être élevé ou l'enroulement supplémentaire du tore doit comporter un nombre très élevé de spires.

Ces solutions ne sont pas faciles à intégrer dans les dispositifs de protection puisqu'un courant de test élevé nécessite des composants de forte puissance pour limiter ledit courant. De plus, ces composants sont volumineux et dissipent de l'énergie électrique. Un tore ayant un nombre de spires élevé a également des dimensions très grandes. Ainsi, l'augmentation du nombre de spires ou l'augmentation de courant sont peu compatibles avec des dispositifs de faibles dimensions.

Des dispositifs de protection différentielle peuvent comporter des dispositifs de signalisation pour signaler un dépassement de seuil. Dans les dispositifs connus, les fonctions de signalisation sont associés aux circuits de déclenchement pour signaler un dépassement de seuil proportionnel au calibre de protection sélectionné. Cependant, lorsque les dispositifs de signalisation ont des organes qui nécessitent une énergie de fonctionnement élevée, une alimentation extérieure supplémentaire devient indispensable. En effet, si les organes de signalisation sont des voyants lumineux ou des relais électromagnétiques, l'énergie fournie par le tore est insuffisante.

Les dispositifs de protection connus comportant des dispositifs de signalisation ne permettent pas d'avoir une signalisation dépendante du calibre sélectionné et isolé galvaniquement des fonctions de protection telles que le circuit de déclenchement.

Des dispositifs de protection différentiel selon l'état de la technique sont décrits dans le document US-A-4 833 564.

L'invention a pour but un dispositif de protection différentielle qui évite ces inconvénients et comporte des fonctions améliorées.

Un dispositif de protection différentielle selon l'invention comporte des moyens de sélection pour sélectionner un calibre de fonctionnement des moyens de traitement, et des moyens de test connectés aux moyens de mesure et associés aux moyens de sélection de calibre pour sélectionner un calibre bas lorsque lesdits moyens de test sont actionnés.

Dans un mode de réalisation préférentiel, le dispositif comporte des moyens de réglage de temporisation pour sélectionner des courbes de déclenchement des moyens actionneurs.

Selon un mode de réalisation particulier, le dispositif comporte des moyens de déclenchement à distance connectées aux moyens actionneurs et comportant au mois un composant à seuil de tension pour filtrer des tensions d'entrée.

Selon un développement de l'invention, le dispositif comporte des moyens de signalisation connectés aux moyens de mesure pour recevoir un second signal représentatif d'un courant différentiel et comportant des moyens de réglage d'un seuil de signalisation, des moyens comparateurs recevant en entrée un signal représentatif du courant différentiel et un signal représentatif du seuil de signalisation, et des organes de signalisation connectés en sortie des moyens comparateurs.

Avantageusement, les moyens de signalisation comportent des moyens de détection de la déconnexion des moyens de mesure.

De préférence, les moyens de visualisation sont isolés galvaniquement des moyens de traitement.

Pour amplifier un signal représentatif d'un courant différentiel, de préférence, les moyens de visualisation comportent des moyens amplificateurs connectés entre les moyens de mesure et les moyens comparateurs.

Avantageusement, les moyens de visualisation comportent un circuit d'alimentation comportant des moyens de déconnexion temporaire.

Dans un mode de réalisation préférentiel, les moyens de mesure comportent un transformateur comportant un premier enroulement connecté aux moyens de traitement et un second enroulement connecté aux moyens de signalisation, le premier enroulement ayant une impédance de charge inférieure à une impédance de charge du second enroulement.

De préférence, les moyens de traitement comportent une charge électrique connectée au premier enroulement, les moyens de sélection modifiant ladite charge électrique pour sélectionner le calibre de fonctionnement de moyens de traitement et pour que le second enroulement fournisse aux moyens de signalisation un signal représentatif du courant différentiel en fonction du calibre sélectionné.

Les avantages et caractéristiques ressortiront plus clairement de la description qui va suivre, de modes particuliers de réalisation de l'invention, donnés à titre d'exemples non limitatifs, et représentés aux dessins annexés sur lesquels:
- la figure 1 représente un schéma bloc général d'un dispositif selon l'invention ;
- la figure 2 représente un schéma détaillé d'un mode de réalisation d'un circuit de traitement d'un dispositif selon la figure 1 ;
- la figure 3 représente un schéma détaillé d'un mode de réalisation d'un dispositif de signalisation pour un dispositif selon la figure 1.

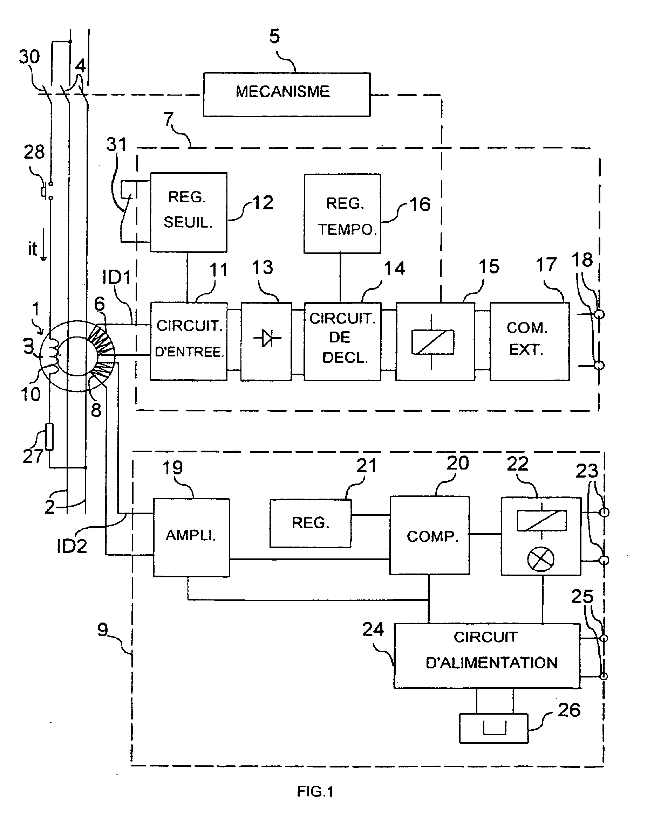

Le dispositif de protection différentielle représenté sur la figure 1 comporte un tore de mesure 1 disposé sur des conducteurs de ligne 2 d'une installation à protéger. Un circuit magnétique 3 du tore entoure les conducteurs de ligne 2 qui forment ainsi un enroulement 2 primaire. Sur ce schéma, les conducteurs 2 sont connectés en série avec des contacts 4 pouvant être ouverts par un mécanisme 5. Ces contacts 4 peuvent être des contacts d'un relais, d'un interrupteur ou d'un disjoncteur.

Dans un dispositif selon un mode de réalisation de l'invention, le tore de mesure 1 comporte un premier enroulement secondaire 6 connecté à un circuit de traitement 7, un second enroulement secondaire 8 connecté à un dispositif de signalisation 9, et un enroulement supplémentaire 10 utilisé pour recevoir un courant de test It.

Le circuit de traitement 7 comporte un circuit d'entrée 11 connecté au premier enroulement 6 du tore 1 pour recevoir un premier signal ID1 représentatif d'un courant différentiel circulant dans les conducteurs 2. Un premier dispositif de réglage 12 connecté au circuit d'entrée 11 permet le réglage d'un calibre de fonctionnement ou d'un seuil de fonctionnement prédéterminé. Si le courant différentiel dépasse ledit seuil, le dispositif de protection agit par exemple sur les contacts 4.

Une sortie du circuit 11 est connectée à un circuit redresseur 13 qui fournit un signal redressé à un circuit de déclenchement 14. Ce circuit 14 contrôle la temporisation et la commande d'un relais 15 selon les courbes de déclenchement prédéterminées.

Un relais 15 est connecté à une sortie du circuit 14. Ainsi, le circuit 14 contrôle la temporisation et la commande du relais 15 selon des courbes de déclenchement prédéterminées. Un second dispositif de réglage 16 connecté au circuit 14 de contrôle permet de sélectionner la temporisation ou les courbes de déclenchement.

Le relais 15 actionne un mécanisme 5 pour ouvrir les contacts 4. Dans le mode de réalisation de la figure 1, un module 17 de commande externe est connecté entre des bornes d'entrée 18 et le relais 15. Ce module permet de commander le relais lorsqu'un signal de commande d'ouverture est appliqué sur les bornes d'entrée 18.

Le dispositif de signalisation 9 comporte un amplificateur 19 connecté au second enroulement secondaire 8 pour recevoir un second signal ID2 représentatif d'un courant différentiel. Une sortie de l'amplificateur 19 est connectée à une première entrée d'un comparateur 20. Une seconde entrée du comparateur 20 est connectée à un dispositif de réglage 21 de seuil de signalisation. Une sortie du comparateur 20 est connectée à au moins un organe de signalisation tel qu'un voyant lumineux ou relais. Si l'organe 22 comporte un relais, des contacts dudit relais peuvent être connectés à des bornes de sortie 23 pour signaler à distance un dépassement de seuil.

L'alimentation en énergie électrique des circuits électroniques du dispositif de signalisation est assurée par un circuit d'alimentation 24 connecté à des bornes d'entrée 25 d'alimentation.

Le circuit d'alimentation 24 peut fournir des tensions différentes pour l'organe de signalisation 22 et pour les circuits amplificateurs 19 et comparateur 20. Pour protéger le dispositif de signalisation pendant des essais de tenue diélectrique, le circuit d'alimentation comporte un dispositif de protection 26 permettant de déconnecter momentanément l'alimentation fournie par les bornes d'entrée 25.

L'amplificateur 19 amplifie le signal ID2 et fournit au comparateur 20 un signal amplifié représentatif du signal ID2 et du courant de défaut différentiel. Le comparateur compare le signal fourni par l'amplificateur au seuil de signalisation fourni par le dispositif 21 et commande l'organe de signalisation si le signal représentatif du courant différentiel dépasse ledit seuil de signalisation.

Pour calibrer le dispositif de protection différentielle, le circuit d'entrée 11 comporte une résistance de charge qui absorbe le courant ID1 fourni par le premier enroulement 6. Cette charge du circuit d'entrée ayant une impédance plus faible que l'entrée de l'amplificateur 19 du dispositif de signalisation, la tension fournie par le second enroulement est dépendante de la charge du circuit d'entrée 11 et des nombres de spires respectifs des premier et second enroulements. Ainsi, le signal ID2 dépend du courant de défaut différentiel et de la charge du circuit d'entrée qui détermine le calibre du dispositif de protection différentielle. Le dispositif fournit alors une signalisation qui dépend aussi du calibre de réglage de la protection.

Le dispositif de protection différentielle représenté sur la figure 1 comporte un dispositif de test comprenant l'enroulement supplémentaire 10 du tore connecté en série avec une résistance 27 et un contact d'un bouton poussoir 28. Ce dispositif de test est connecté entre un premier conducteur principal en amont du tore 1 et un second conducteur principal en aval du tore 1. Pour arrêter le courant de test It lorsque les contacts 4 sont ouverts, un contact 30 supplémentaire est connecté en série avec le contact du bouton poussoir. Ainsi, lors d'un test, une action sur le bouton poussoir 28 permet le passage d'un courant de test et lorsqu'un déclenchement est provoqué par ledit courant de test, le mécanisme 5 ouvre les contacts principaux 4 et le contact supplémentaire 30. Dès que le contact 30 est ouvert, le courant de test est interrompu.

Pour limiter la valeur du courant de test, ainsi que le nombre de spires de l'enroulement supplémentaire 10, et la puissance et la taille de la résistance 27, le dispositif de test agit sur le premier dispositif de réglage 12 afin de sélectionner un calibre bas ou minimal de fonctionnement. Ainsi, lors du test, un courant de test faible suffit à tester le fonctionnement du dispositif de protection différentielle.

Pour agir sur le dispositif de réglage, un contact 31 connecté audit dispositif 12 est actionné en même temps que le bouton poussoir 28. Le poussoir 28 et le contact 31 peuvent être solidarés mécaniquement ou faire partie d'un même composant.

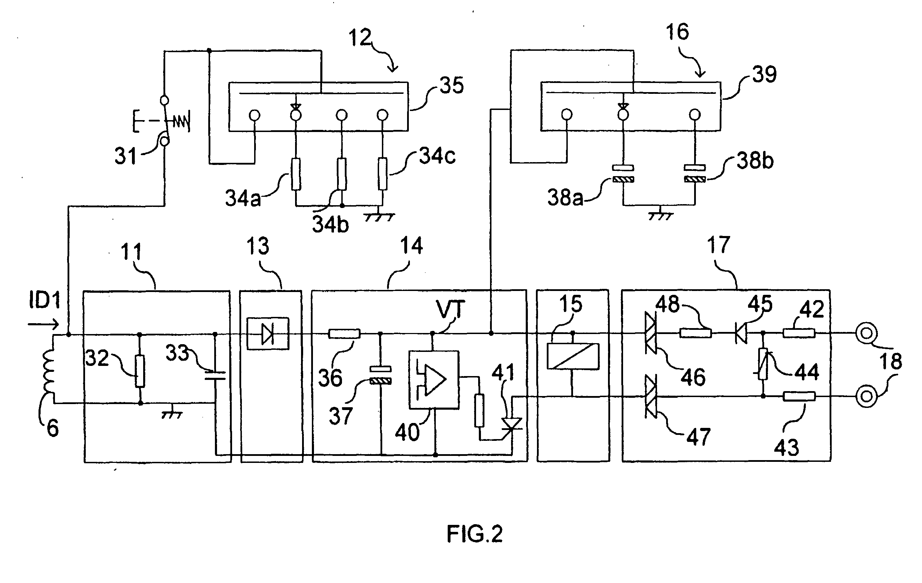

La figure 2 montre un schéma détaillé d'un mode de réalisation d'un circuit de traitement. Dans ce mode de réalisation, le premier enroulement 6 est connecté à une résistance de charge 32 du circuit d'entrée 11. Cette résistance 32 de charge détermine la sensibilité maximale du circuit de traitement et, par conséquent, le calibre minimal du dispositif de protection. Dans ce circuit d'entrée, un condensateur 33 filtre et adapte les signaux représentatifs de courants différentiels ID1.

Pour augmenter le calibre du dispositif de protection, le premier dispositif de réglage 12 comporte des résistances 34a, 34b, 34c destinées à être connectées en parallèle sur la résistance de charge 32. Ainsi, lorsqu'au moins une des résistances 34a-c est connectée, la résistance équivalente est plus faible et il faut un courant différentiel plus élevé pour provoquer la commande du relais 15. La sélection du calibre de fonctionnement se fait par l'intermédiaire d'un commutateur 35 connecté entre le circuit d'entrée 11 et les résistances 34a-c. Ainsi, lorsque le commutateur 35 connecte une résistance, une partie du courant ID1 fourni par le premier enroulement 6 est dérivé à travers ladite résistance. La sélection du calibre minimum au moment du test est assurée par le contact 31 connecté en série entre le commutateur 35 et le circuit d'entrée 11. Lors du test, une action sur le contact 31 à ouverture déconnecte le premier dispositif de sélection 12 et le calibre minimal ou un calibre inférieur est automatiquement sélectionné.

Avantageusement, ce mode de réalisation permet aussi de passer automatiquement en calibre minimum si le premier dispositif de réglage 12 est défaillant. En effet, si des contacts du commutateur 35 sont ouverts, des résistances 34a-34c seront déconnectées et seule la résistance 32 recevra le signal de courant ID1.

A la sortie du circuit d'entrée, le signal calibré en fonction du calibre sélectionné est redressé par un circuit de redressement 13 avant d'être appliqué au circuit de déclenchement 14. Ce circuit comprend un circuit de temporisation ou de retard comportant une résistance 36 et un condensateur 37 connecté en série et formant un circuit RC. Un signal retardé est recueilli sur les bornes du condensateur. Le retard introduit par ce circuit est proportionnel aux valeurs des composants tels que la résistance 36 et le condensateur 37. Le second dispositif de réglage 16 permet de modifier la valeur de la temporisation ou du retard en connectant des condensateurs 38a ou 38b en parallèle sur le condensateur 37. Pour sélectionner le retard, un commutateur 39 est connecté en série entre le condensateur 37 et les condensateurs 38a-b. Dans le mode de réalisation de la figure 2, le commutateur 39 permet de sélectionner une temporisation minimale sans connecter d'autres condensateurs ou des temporisations plus longues en ajoutant un condensateur 38a-b en parallèle.

Avantageusement, ce mode de réalisation permet de passer automatiquement en temporisation minimale si le second dispositif de réglage 16 est défaillant. En effet, si des contacts du commutateur 39 sont ouverts, des condensateurs 38a ou 38b seront déconnectés du condensateur 37 et par conséquent le retard sera minimum.

Un signal électrique VT présent en sortie du circuit RC, formé par la résistance 36 et le condensateur 37 éventuellement complété par les condensateurs 38a-38b, est appliqué à un composant 40 à seuil de tension. Lorsque le signal VT dépasse un seuil de tension prédéterminé, le composant 40 commande la gâchette d'un thyristor 41 qui permet d'alimenter le relais 15. Le seuil de tension du composant 40 associé à la valeur de la résistance de charge 32 et éventuellement des résistances 34 a-c permet de déterminer le seuil de déclenchement du dispositif de protection. Les courbes de déclenchement sont déterminées par le retard introduit par le circuit RC formé par la résistance 36 et les condensateurs 37 et 38a-b sélectionnés par le commutateur 39.

Le module de commande externe 17 comporte deux résistances 42 et 43 de limitation connectées aux bornes d'entrée 18, un composant écrêteur 44 connecté en aval des résistances 42 et 43, une diode de redressement 45 connectée à une des résistances par exemple la résistance 42 et deux composants à seuil de tension 46 et 47 connectés en série avec les résistance respectivement 42 et 43 et le relais 15. Une résistance 48 supplémentaire de limitation peut aussi être connectée en série avec la diode 45. Les composants à seuil de tension 46 et 47 sont de préférence des diacs. Ils permettent notamment de filtrer des tensions parasites qui peuvent apparaître sur les bornes d'entrée 18. Lorsqu'une tension supérieure à la tension de conduction des composants 48 et 47 disposés en série est appliquée sur les entrées 18, un courant circule dans le relais 15 et le dispositif de protection est déclenché. Le courant circulant dans le relais est limité par les résistances 42, 43, 48 ainsi que par le composant écrêteur 44. Ce composant 44 est, par exemple, une varistance.

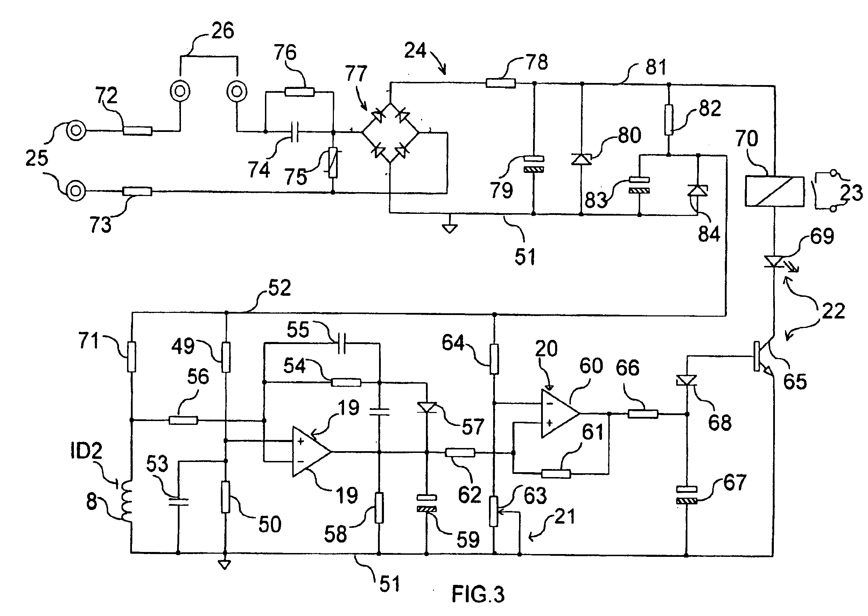

Un schéma d'un mode de réalisation d'un dispositif de signalisation 9 est représenté sur la figure 3. Sur le schéma, un amplificateur 19 a une entrée non-inverseuse polarisée par un pont de résistances 49 et 50 connecté entre une ligne de référence 51 et une ligne d'alimentation 52. Le point commun du pont est connecté à l'entrée non-inverseuse et à un condensateur 53 de découplage. Un circuit de contre réaction comporte une résistance 54 et un condensateur 55 connectés en parallèle entre la sortie et l'entrée inverseuse de l'amplificateur 19.

L'enroulement 8 fournissant le signal ID2 est connecté à l'amplificateur à travers une résistance 56 d'entrée disposée entre une première extrémité de l'enroulement 8 et l'entrée inverseuse. Une seconde extrémité de l'enroulement 8 est connectée à la ligne de référence 51. Le gain de l'amplificateur est déterminé par la résistance 49, le condensateur 50 et la résistance 56. La sortie de l'amplificateur 19 est connectée à une diode 57 de redressement. Cette diode fournit un signal redressé à un circuit détecteur de crête comportant une résistance 58 et un condensateur 59.

Un signal ainsi détecté est appliqué à l'entrée d'un comparateur 20 à hystérésis. Ce comparateur comporte par exemple, un amplificateur opérationnel 60 ayant une résistance 61 connectée entre sa sortie et son entrée non inverseuse et une résistance 62 connectée entre ladite entrée non-inverseuse et la diode 57 fournissant le signal à comparer. L'entrée inverseuse du comparateur est connectée au dispositif de réglage 21 du seuil de signalisation. Ce dispositif comporte un potentiomètre ou une résistance variable 63 connectée en série avec une résistance 64 de polarisation. Les résistances 63 et 64 sont connectées au pont diviseur de tension entre la ligne de référence 51 et la ligne d'alimentation 52. L'entrée inverseuse est connectée au point commun du pont de résistances 63, 64. Le curseur de la résistance 63 est de préférence relié à la ligne de référence 51. Le réglage de la résistance 64 détermine le seuil de basculement du comparateur à hystérésis 20.

Lorsque le seuil de signalisation est dépassé, la sortie du comparateur passe à un état haut et fournit un signal de commande à un transistor 65 à travers un circuit de filtrage. Ce circuit de filtrage comporte un circuit RC comportant une résistance 66 en série avec un condensateur 67. La résistance est connectée à la sortie du comparateur, le condensateur 67 est connecté à la ligne de référence, et le point commun de la résistance et du condensateur est relié à la borne du transistor 65 à travers une diode zener 68. Le transistor 65 alimente une diode électroluminescente 69 et/ou un relais 70 de signalisation lorsque le seuil de réglage de signalisation est dépassé.

Pour contrôler et signaler une connexion correcte de l'enroulement 8 sur le dispositif de signalisation, une résistance 71 est connectée entre la ligne d'alimentation 51 et la résistance d'entrée 56. Ainsi, tant que l'enroulement 8 est connecté, l'impédance dudit enroulement étant basse, le courant continu circulant dans la résistance 71 est dérivé et il n'y a pas d'action sur l'amplificateur. Si l'enroulement 8 est déconnecté, une tension continue élevée est appliquée sur l'entrée de l'amplificateur et le seuil de signalisation est automatiquement dépassé.

L'alimentation du circuit de signalisation est fournie par une tension appliquée à des bornes 25 d'entrée. Le circuit d'alimentation comporte deux résistances 72 et 73 connectées aux bornes 25 pour limiter le courant d'entrée, un condensateur 74 connecté en série avec une des résistances 72 ou 73 pour provoquer une chute de tension et une varistance 75 connectée en aval des résistances et du condensateur pour éliminer des surtensions parasites. Le dispositif 26 est disposé en série avec l'une des résistances 72 ou 73 pour arrêter momentanément l'alimentation. Pour améliorer le fonctionnement, une résistance 76 est connectée en parallèle avec le condensateur 74. La chute de tension réalisée par le condensateur 74 permet de ne pas dissiper de l'énergie active qui provoque un échauffement. En effet, l'énergie absorbée par le condensateur est réactive et évite de chauffer le dispositif de protection différentielle.

Un pont redresseur 77 est connecté en aval des résistances 72, 73 et du condensateur 74, il permet de fournir une tension redressée à un premier circuit de régulation. Ce premier circuit comporte une résistance de limitation 78 connectée à une sortie positive du pont 77, une sortie négative du pont étant connectée à la ligne de référence 51. Un condensateur 79 et une diode zener 80 sont connectés entre la résistance 78 et la ligne de référence 51 pour filtrer une première tension continue appliquée à travers une ligne 81 aux organes de visualisation 22 tels que le relais 70 et la diode électroluminescente 69.

Un second circuit de régulation comporte une résistance de régulation 82 connectée par une première extrémité à la ligne 81 pour recevoir la première tension continue. Ce circuit comporte aussi un condensateur 83 et une diode zener 84 connectée entre la seconde extrémité de la résistance 82 et la ligne de référence 51. Une seconde tension continue présente aux bornes de la diode zener 84 est fournie à la ligne d'alimentation 52 connectée à ladite diode 84.

De préférence, la première tension continue a une valeur de 24 volts et la seconde tension continue a une valeur de 12 volts.

Dans ce schéma, l'enroulement 8 est connecté à un amplificateur électronique dont l'impédance d'entrée est élevée. Ainsi, la charge de l'enroulement 8 ne perturbe pas la charge de l'enroulement 6 qui est à basse impédance. Le signal ID2 fourni se trouve par conséquent dépendant aussi de la charge de l'enroulement 6 et du calibre de déclenchement du dispositif de protection.

Dans ce mode de réalisation, le circuit de traitement 7 et le dispositif de signalisation 9 sont isolés galvaniquement et dépendent du calibre sélectionné déterminé par la charge de l'enroulement 6. La signalisation est donc proportionnelle au calibre choisi par le dispositif de sélection de calibre 12 du circuit de traitement.

Le dispositif de protection différentielle peut être réalisé de manière groupée dans un boîtier monobloc tel qu'un interrupteur ou un disjoncteur. Cependant, dans d'autres modes de réalisation, il est possible de séparer les éléments en modules interconnectés. Dans un relais de protection différentielle, il n'est pas nécessaire d'agir sur la coupure de contacts principaux 4, d'autres actions peuvent être envisagées.

## Revendications

1. Dispositif de protection différentiel comportant :
- des moyens de mesure (1) de courant différentiel,
- des moyens de traitement (7) connectés aux moyens de mesure (1) par un premier enroulement secondaire (6) pour recevoir un premier signal (ID1) représentatif d'un courant différentiel,
- des moyens actionneurs (15, 5),
- des moyens de sélection (12) pour sélectionner un calibre de fonctionnement des moyens de traitement (7), et
- des moyens de test (10, 27, 28, 31) connectés aux moyens de mesure (1) par un enroulement supplémentaire (10) et associés aux moyens de sélection de calibre (12) via un circuit d'entrée (11) pour sélectionner un calibre bas lorsque lesdits moyens de test sont actionnés.
dispositif **caractérisé en ce qu'**il comporte des moyens de signalisation (9) connectés aux moyens de mesure (1) par un second enroulement secondaire (8) pour recevoir un second signal (ID2) représentatif d'un courant différentiel et de la charge du circuit d'entrée (11) déterminant le calibre du dispositif de protection différentielle, ledit dispositif fournissant une signalisation dépendante du calibre de fonctionnement des moyens de traitement (7).

2. Dispositif selon la revendication 1, **caractérisé en ce qu'**il comporte des moyens de réglage de temporisation (16, 33a-b, 39) pour sélectionner des courbes de déclenchement des moyens actionneurs (15).

3. Dispositif selon l'une des revendications 1 ou 2, **caractérisé en ce qu'**il comporte des moyens de déclenchement à distance (17) connectés aux moyens actionneurs (15) et comportant au moins un composant à seuil de tension (46, 47) pour filtrer des tensions d'entrée.

4. Dispositif selon l'une quelconque des revendications 1 à 3, **caractérisé en ce qu'**il comporte des moyens de signalisation (9) connectés aux moyens de mesure pour recevoir un second signal (ID2) représentatif d'un courant différentiel et comportant des moyens de réglage (21) d'un seuil de signalisation, des moyens comparateurs (20) recevant en entrée un signal représentatif du courant différentiel et un signal représentatif du seuil de signalisation, et des organes de signalisation (22, 69, 70) connectée en sortie des moyens comparateurs.

5. Dispositif selon la revendication 4, **caractérisé en ce que** les moyens de signalisation comportent des moyens de détection (71, 19) de la déconnexion des moyens de mesure (1, B).

6. Dispositif selon l'une des revendications 4 ou 5, **caractérisé en ce que** les moyens de visualisation (9) sont isolés galvaniquement des moyens de traitement (7).

7. Dispositif selon l'une quelconque des revendications 4 à 6, **caractérisé en ce que** les moyens de visualisation comportent des moyens amplificateurs (19) connectés entre les moyens de mesure (8) et les moyens comparateurs (20).

8. Dispositifs selon l'une quelconque des revendications 4 à 7, **caractérisé en ce que** les moyens de visualisation comportent un circuit d'alimentation comportant des moyens de déconnexion temporaire.

9. Dispositif selon l'une quelconque des revendications 4 à 8, **caractérisé en ce que** les moyens de mesure (1) comportent un transformateur comportant un premier enroulement (6) connecté aux moyens de traitement (7) et un second enroulement (8) connecté aux moyens de signalisation (9), le premier enroulement ayant une impédance de charge (32) inférieure à une impédance de charge du second enroulement.

10. Dispositif selon l'une quelconque des revendications 4 à 9, **caractérisé en ce que** les moyens de traitement (7) comportent une charge électrique (32) connectée au premier enroulement (6), les moyens de sélection modifiant ladite charge électrique pour sélectionner le calibre de fonctionnement de moyens de traitement (7) et pour que le second enroulement fournisse aux moyens de signalisation un signal représentatif du courant différentiel en fonction du calibre sélectionné.

## Patentansprüche

1. Fehlerstrom-Schutzeinrichtung mit
- Messmitteln (1) zur Fehlerstrommessung,
- mittels einer ersten sekundären Wicklung (6) an die Messmittel (1) angeschlossenen Verarbeitungsmitteln (7) zur Beaufschlagung mit einem, einen Fehlerstrom abbildenden ersten Signal (ID1),
- Betätigungsmitteln (15, 5),
- Einstellmitteln (12) zur Einstellung eines Nennfehlerstroms der Verarbeitungsmittel (7), und
- mittels einer zusätzlichen Wicklung (10) an die Messmittel (1) angeschlossenen und mittels eines Eingangsschaltkreises (11) den Nennfehlerstrom-Einstellmitteln (12) zugeordneten Prüfmitteln (10, 27, 28, 31) zur Einstellung eines niedrigen Nennfehlerstroms bei Betätigung der Prüfmittel, welche Einrichtung **dadurch gekennzeichnet ist, dass** sie mittels einer zweiten sekundären Wicklung (8) an die Messmittel (1) angeschlossene Anzeigemittel (9) zur Beaufschlagung mit einem einen Fehlerstrom und dem Lastwiderstand des Eingangsschaltkreises (11) abbildenden zweiten Signal (ID2) umfasst, das den Nennfehlerstrom der Fehlerstrom-Schutzeinrichtung bestimmt, welche Einrichtung eine von dem Nennfehlerstrom der Verarbeitungsmittel (7) abhängige Anzeige liefert.

2. Einrichtung nach Anspruch 1, **dadurch gekennzeichnet, dass** sie Zeitverzögerungs-Einstellmittel (16, 33a-b, 39) zur Einstellung von Auslösekurven der Betätigungsmittel (15) umfasst.

3. Einrichtung nach Anspruch 1 oder 2, **dadurch gekennzeichnet, dass** sie Fernauslösemittel (7) umfasst, die an die Betätigungsmittel (15) angeschlossen sind und mindestens ein spannungsabhängiges Schaltglied (46, 47) zur Filterung von Eingangsspannungen umfassen.

4. Einrichtung nach irgendeinem der Ansprüche 1 bis 3, **dadurch gekennzeichnet, dass** sie an die Messmittel angeschlossene Anzeigemittel (9) zur Beaufschlagung mit einem, einen Fehlerstrom abbildenden zweiten Signal (ID2) umfasst, welche Anzeigemittel Einstellmittel (21) zur Einstellung eines Anzeigeschwellwerts, Vergleichsmittel (20), deren Eingang mit einem Signal, das einen Fehlerstrom abbildet, sowie mit einem Signal, das den Anzeigeschwellwert abbildet, beaufschlagt wird, sowie an den Ausgang der Vergleichsmittel angeschlossene Anzeigeelemente (22, 69, 70) umfassen.

5. Einrichtung nach Anspruch 4, **dadurch gekennzeichnet, dass** die Anzeigemittel Detektionsmittel (71, 19) zur Erfassung der elektrischen Trennung der Messmittel (1, B) umfassen.

6. Einrichtung nach einem der Ansprüche 4 oder 5, **dadurch gekennzeichnet, dass** die Anzeigemittel (9) von den Verarbeitungsmitteln (7) galvanisch getrennt sind.

7. Einrichtung nach irgendeinem der Ansprüche 4 bis 6, **dadurch gekennzeichnet, dass** die Anzeigemittel Verstärkungsmittel (19) umfassen, die zwischen die Messmittel (8) und die Vergleichsmittel (20) geschaltet sind.

8. Einrichtung nach irgendeinem der Ansprüche 4 bis 7, **dadurch gekennzeichnet, dass** die Anzeigemittel eine Stromversorgungsschaltung mit Mitteln zur vorübergehenden elektrischen Trennung umfassen.

9. Einrichtung nach irgendeinem der Ansprüche 4 bis 8, **dadurch gekennzeichnet, dass** die Messmittel (1) einen Stromwandler mit einer an die Verarbeitungsmittel (7) angeschlossenen ersten Wicklung (6) sowie einer an die Anzeigemittel (9) angeschlossenen zweiten Wicklung (8) umfassen, wobei die erste Wicklung eine kleinere Lastimpedanz (32) aufweist als die zweite Wicklung.

10. Einrichtung nach irgendeinem der Ansprüche 4 bis 9, **dadurch gekennzeichnet, dass** die Verarbeitungsmittel (7) einen an die erste Wicklung (6) angeschlossenen elektrischen Lastwiderstand (32) umfassen, welcher Widerstand durch die Einstellmittel verändert wird, um den Nennfehlerstrom der Verarbeitungsmittel (7) einzustellen, und damit die zweite Wicklung ein Signal an die Anzeigemittel liefert, das einen Fehlerstrom in Abhängigkeit vom eingestellten Nennfehlerstrom abbildet.

## Claims

1. A differential protection device comprising:
- measuring means (1) for measuring differential current,
- processing means (7) connected to the measuring means (1) by a first secondary winding (6) to receive a first signal (ID1) representative of a differential current,
- actuating means (15, 5),
- selection means (12) to select an operating rating of the processing means (7), and
- test means (10, 27, 28, 31) connected to the measuring means (1) by an additional winding (10) and associated with the rating selection means (12) via an input circuit (11) to select a low rating when said test means are actuated,
a device **characterized in that** it comprises: signaling means (9) connected to the measuring means (1) by a second secondary winding (8) to receive a second signal (ID2) representative of a differential current and of the load of the input circuit (11) determining the rating of the differential protection device, said device providing a signaling dependent on the operating rating of the processing means (7).

2. The device according to claim 1, **characterized in that** it comprises time delay setting means (16, 33a-b, 39) to select tripping curves of the actuating means (15).

3. The device according to one of claims 1 or 2, **characterized in that** it comprises remote tripping means (17) connected to the actuating means (15) and comprising at least one voltage threshold component (46, 47) to filter input voltages.

4. The device according to any one of claims 1 to 3, **characterized in that** it comprises indicating means (9) connected to the measuring means to receive a second signal (ID2) representative of a differential current and comprising setting means (21) for setting an indicating threshold, comparator means (20) receiving on input a signal representative of the differential current and a signal representative of the indicating threshold, and indicating devices (22, 69, 70) connected on output of the comparator means.

5. The device according to claim 4, **characterized in that** the indicating means comprise detection means (71, 19) for detecting disconnection of the measuring means (1, B).

6. The device according to one of claims 4 or 5, **characterized in that** the display means (9) are galvanically insulated from the processing means (7).

7. The device according to any one of claims 4 to 6, **characterized in that** the display means comprise amplifier means (19) connected between the measuring means (8) and the comparator means (20).

8. The device according to any one of claims 4 to 7, **characterized in that** the display means comprise a power supply circuit comprising temporary disconnection means.

9. The device according to any one of claims 4 to 8, **characterized in that** the measuring means (1) comprise a transformer comprising a first winding (6) connected to the processing means (7) and a second winding (8) connected to the indicating means (9), the first winding having a lower load impedance (32) than a load impedance of the second winding.

10. The device according to any one of claims 4 to 9, **characterized in that** the processing means (7) comprise an electric load (32) connected to the first winding (6), the selection means modifying said electric load to select the operating rating of the processing means (7) and for the second winding to supply the indicating means with a signal representative of the differential current according to the selected rating.
